# EUROPEAN PATENT APPLICATION

(11) **EP 4 596 497 A1**
(43) Date of publication of application: **06.08.2025**
(21) Application number: 23870791.3
(22) Date of filing: 26.09.2023
(51) Int. Cl.: C01D 15/04, C22B 26/12, C02F 1/28

(54) **RAW BRINE TREATMENT SYSTEM, RAW BRINE TREATMENT METHOD, AND LITHIUM COMPOUND**

(30) Priority: 28.09.2022 CN 202211192009
(71) Applicant: BYD Company Limited, Shenzhen, Guangdong 518118 (CN)
(72) Inventor: GONG, Qing, Shenzhen, Guangdong 518118 (CN); MA, Yuegeng, Shenzhen, Guangdong 518118 (CN); LIAN, Junlan, Shenzhen, Guangdong 518118 (CN); LIN, Hongye, Shenzhen, Guangdong 518118 (CN)
(74) Representative: Mathys & Squire
(86) International application number: PCT/CN2023/121485
(87) International publication number: WO 2024/067562

(57) **Abstract**

The present disclosure discloses a raw brine treatment system, a raw brine treatment method, and a lithium compound. The raw brine treatment system includes: an ion exchange adsorption unit (100), where the ion exchange adsorption unit (100) includes one or more adsorption columns (110), a part of raw brine to be treated is subjected to adsorption treatment in an adsorption process (111) and then subjected to desorption treatment with desorption water in a desorption process (112); a desorption water extraction unit (200), where another part of the raw brine to be treated and/or a part of adsorption tail solution of the ion exchange adsorption unit (100) enters the desorption water extraction unit (200), the desorption water extraction unit (200) is configured to extract the desorption water from the raw brine and/or the adsorption tail solution that enters the desorption water extraction unit (200), and the desorption water extraction unit (200) is connected to the ion exchange adsorption unit (100); and a recovery unit (300), where the recovery unit (300) is connected to the ion exchange adsorption unit (100) and the desorption water extraction unit (200).

## Description

### CROSS-REFERENCE TO RELATED APPLICATION

This application claims priority to and benefits of Chinese Patent Application No. 202211192009.8, filed on September 28, 2022. The entire content of the above-referenced application is incorporated herein by reference.

### FIELD

The present disclosure relates to the technical field of lithium extraction from salt lakes, and specifically, to a raw brine treatment system, a raw brine treatment method, and a lithium compound.

### BACKGROUND

Lithium and its compounds are widely used and have important strategic value for the development of the country and society. Especially in recent years, the demand for lithium resources has increased significantly, but the production capacity of lithium resources cannot meet the sudden increase in demand in time, leading to the high price of lithium and the shortage of lithium resources. Salt lake lithium extraction plants require the use of a large amount of fresh water for key processes such as adsorption and lithium precipitation. Salt lakes are mostly located in high-altitude desert areas, which are extremely dry and short of water and far away from water sources. The high costs of transporting fresh water poses a great obstacle to the normal operation of salt lake lithium extraction process systems. In addition, salt lake brine is mostly stored in spongy pores, and it is difficult to reinject tail brine after lithium extraction from raw brine. In the related art, a tail brine tank is built to store tail brine. Because of the large amount of tail brine, it is necessary to plan a huge area for the tank.

Therefore, existing raw brine treatment systems and raw brine treatment methods suitable for lithium extraction from salt lakes still need to be improved.

### SUMMARY

The present disclosure aims to alleviate or solve, at least to some extent, at least one of the above-mentioned problems.

According to an aspect of the present disclosure, the present disclosure provides a raw brine treatment system suitable for lithium extraction from salt lakes. The raw brine treatment system includes: an ion exchange adsorption unit, wherein the ion exchange adsorption unit includes one or more adsorption columns filled with an adsorbent, a part of the raw brine to be treated is subjected to an adsorption treatment in an adsorption process of the adsorption column and then subjected to a desorption treatment with desorption water in a desorption process of the adsorption column; a desorption water extraction unit, wherein another part of the raw brine to be treated and/or a part of an adsorption tail solution of the ion exchange adsorption unit enters the desorption water extraction unit, the desorption water extraction unit being configured to extract the desorption water from the raw brine and/or the adsorption tail solution that enters the desorption water extraction unit, the desorption water extraction unit being connected to the ion exchange adsorption unit, so as to make the extracted desorption water enter the desorption process for desorption treatment on a lithium salt in the adsorption column; and a recovery unit, wherein the recovery unit is connected to the ion exchange adsorption unit and the desorption water extraction unit. Therefore, a part of the adsorption tail solution of the ion exchange adsorption unit and/or a part of the raw brine to be treated can be used to extract the desorption water. In addition, a part of the adsorption tail solution of the ion exchange adsorption unit can be used to rinse and recover the crystalline salt mixture carried in the solid precipitate in the desorption water extraction unit. Therefore, using the raw brine treatment system to treat raw brine can at least to a certain extent alleviate or solve the problem that a large amount of process water required for desorption treatment needs to be provided by an external water source and the problem that the tail solution is difficult to be discharged.

According to another aspect of the present disclosure, the present disclosure provides a method of raw brine treatment using the raw brine treatment system, including: making a part of the raw brine to be treated enter the adsorption column of the ion exchange adsorption unit, and enter the desorption process after being subjected to the adsorption treatment in the adsorption process of the adsorption column, wherein in the desorption process, desorption treatment is performed on a lithium salt in the adsorption column, and a qualified solution is obtained after the desorption treatment; making a part of an adsorption tail solution formed after the raw brine is subjected to the adsorption treatment in the adsorption process enter the desorption water extraction unit, and making another part of the raw brine to be treated enter the desorption water extraction unit, wherein the part of adsorption tail solution and another part of the raw brine to be treated are treated by the desorption water extraction unit to obtain desorption water and a crystalline salt mixture, and the desorption water is made to enter the desorption process; and making another part of the adsorption tail solution formed after the raw brine is subjected to the adsorption treatment in the adsorption process enter the recovery unit, and making the crystalline salt mixture enter the recovery unit, where the crystalline salt mixture is rinsed and recovered by using the adsorption tail solution in the recovery unit. Therefore, by the method of raw brine treatment, desorption water can be extracted from the raw brine and the adsorption tail solution, thereby reducing or even avoiding the use of external water sources, and at least to a certain extent alleviating or even solving the technical problem of difficulty in obtaining fresh water. The adsorption tail solution is used for providing desorption water and rinsing and recovering the crystalline salt mixture, thereby making full use of the adsorption tail solution and solving the problem that the adsorption tail solution is difficult to be discharged. The lithium-containing solution obtained by rinsing and recovering the crystalline salt mixture can be mixed with raw brine to be treated, and treated again.

According to still another aspect of the present disclosure, the present disclosure provides a lithium compound, where a method for preparing the lithium compound includes a step of preparing a qualified solution, and the qualified solution is extracted using the raw brine treatment system or obtained by the raw brine treatment method.

### BRIEF DESCRIPTION OF THE DRAWINGS

The above and/or other additional aspects and advantages of the present disclosure become apparent and comprehensible from the description of embodiments in combination with accompanying drawings, in which:
FIG. 1 is a schematic structural diagram of a raw brine treatment system according to an embodiment of the present disclosure;
FIG. 2 is a schematic structural diagram of a raw brine treatment system according to another embodiment of the present disclosure;
FIG. 3 is a schematic structural diagram of a raw brine treatment system according to still another embodiment of the present disclosure;
FIG. 4 is a schematic structural diagram of a raw brine treatment system according to still another embodiment of the present disclosure;
FIG. 5 is a schematic structural diagram of a raw brine treatment system according to still another embodiment of the present disclosure; and
FIG. 6 is a schematic structural diagram of a recovery unit according to an embodiment of the present disclosure.

### List of reference numerals:

100: ion exchange adsorption unit; 110: adsorption column; 111: adsorption process; 112: desorption process; 130: feed port of ion exchange adsorption unit; 200: desorption water extraction unit; 210: feed port of desorption water extraction unit; 220: extraction tail solution outlet; 230: preheater; 240: evaporator; 250: crystallization separation system; 251: liquid inlet; 252: liquid outlet; 253: solid outlet; 260: reverse osmosis assembly; 300: recovery unit; 310: lithium-rich solution outlet of recovery unit; 320: rinsing liquid tank; 330: spraying assembly; 340: conveying assembly; 350: solid inlet; 400: feed pretreatment unit; 410: discharge port of feed pretreatment unit; 420: feed tank; 421: stirrer; 430: filter; 1: raw brine; 1': part of raw brine; 1": another part of raw brine; 2: first diverter valve; 3: second diverter valve; 4: adsorption tail solution; 4': part of adsorption tail solution; 4": another part of adsorption tail solution; 5: high-temperature condensed water; 5': low-temperature condensed water; 6: desorption water; 7: waste liquid; 8: extraction tail solution; 9: crystalline salt mixture; 10: lithium-containing concentrate; 11: qualified solution; 12: lithium-rich solution; 13: waste crystalline salt mixture.

### DETAILED DESCRIPTION

Embodiments of the present disclosure will be exemplarily described in detail hereinafter with reference to accompanying drawings in which the same or like reference characters refer to the same or like elements or elements having the same or like functions throughout. The embodiments described below by reference to the accompanying drawings are exemplary and are intended for explanation only and are not to be construed as limiting the present disclosure.

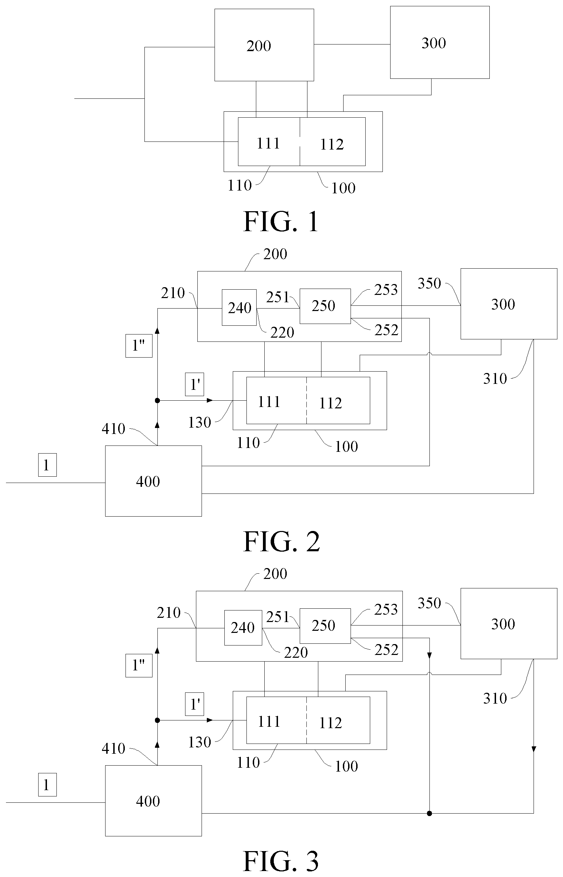

According to an aspect of the present disclosure, the present disclosure provides a raw brine treatment system suitable for lithium extraction from salt lakes. According to an embodiment of the present disclosure, referring to FIG. 1 to FIG. 5, the raw brine treatment system may include an ion exchange adsorption unit 100, a desorption water extraction unit 200, and a recovery unit 300. The ion exchange adsorption unit 100 includes one or more adsorption columns 110 filled with an adsorbent. A part 1' of raw brine to be treated is subjected to adsorption treatment in an adsorption process 111 of the adsorption column 110 and then subjected to desorption treatment with desorption water in a desorption process 112 of the adsorption column. Each adsorption column 110 continuously and cyclically performs adsorption treatment and desorption treatment. Another part 1" of the raw brine to be treated and/or a part of an adsorption tail solution of the ion exchange adsorption unit 100 enters the desorption water extraction unit 200. The desorption water extraction unit 200 is configured to extract the desorption water from the raw brine and/or the adsorption tail solution that enters the desorption water extraction unit 200. The desorption water extraction unit 200 is connected to the ion exchange adsorption unit 100, so as to make the extracted desorption water enter the desorption process for desorption treatment on a lithium salt in the adsorption column 110. The recovery unit 300 is connected to the ion exchange adsorption unit 100 and the desorption water extraction unit 200. Therefore, water in the raw brine and/or the adsorption tail solution can be extracted by using the raw brine treatment system and used as the desorption water, thereby reducing or even avoiding the use of external water sources, and alleviating the problem of difficulty in accessing an external water source. Moreover, full use can be made of the adsorption tail solution, thereby alleviating, at least to a certain extent, or even solving the problem that the adsorption tail solution is difficult to be discharged.

According to some embodiments of the present disclosure, referring to FIG. 1 to FIG. 5, the desorption water extraction unit 200 is connected to the ion exchange adsorption unit 100, so as to make a part of the adsorption tail solution of the ion exchange adsorption unit 100 enter the desorption water extraction unit 200, that is, to make a part of the adsorption tail solution generated in the adsorption process 111 enter the desorption water extraction unit 200. In this way, the desorption water extraction unit can extract the desorption water from the adsorption tail solution, thereby the problems of difficulty in treating the adsorption tail solution and lack of desorption water are solved at the same time.

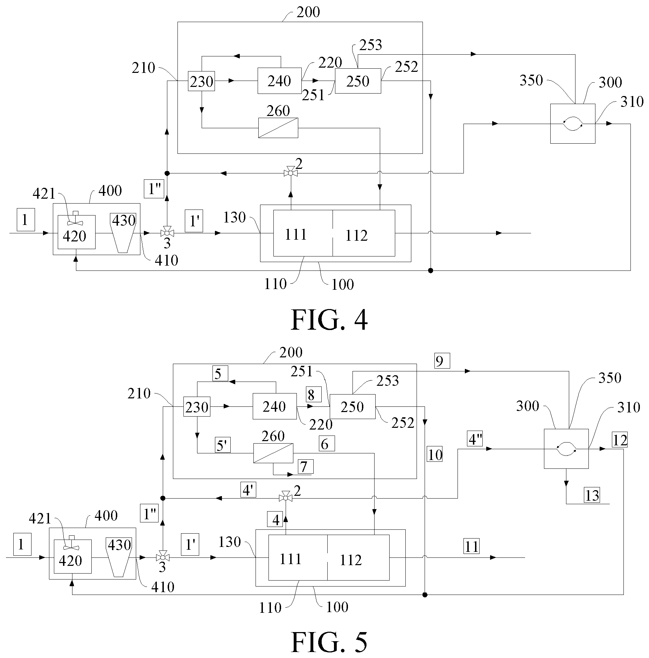

According to some specific embodiments of the present disclosure, referring to FIG. 4 and FIG. 5, a first diverter valve 2 may be arranged on one side of the ion exchange adsorption unit 100. The adsorption process 111 of the ion exchange adsorption unit 100 is respectively connected to the desorption water extraction unit 200 and the recovery unit 300. The arrangement of the first diverter valve 2 divides the adsorption tail solution generated in the adsorption process 111 into two parts, one part of which enters the desorption water extraction unit 200 for extracting the desorption water, and the other part of which enters the recovery unit 300 for rinsing and recovering the crystalline salt mixture, thereby the adsorption tail solution is made full use of and the amount of the adsorption tail solution discharged to the outside is reduced.

According to some embodiments of the present disclosure, referring to FIG. 2 to FIG. 5, the raw brine treatment system may further include a feed pretreatment unit 400. The feed pretreatment unit 400 is connected to both the ion exchange adsorption unit 100 and the desorption water extraction unit 200. A discharge port 410 of the feed pretreatment unit is respectively connected to a feed port 130 of the ion exchange adsorption unit and a feed port 210 of the desorption water extraction unit. Therefore, the raw brine 1 can be pretreated in the feed pretreatment unit first, and then enter the ion exchange adsorption unit and the desorption water extraction unit, which is beneficial to further improving the treatment effect of the raw brine treatment system on the raw brine.

According to some embodiments of the present disclosure, referring to FIG. 2 to FIG. 5, the desorption water extraction unit 200 includes an evaporator 240 and a crystallization separation system 250. The evaporator 240 is connected to the crystallization separation system 250. The crystallization separation system 250 includes a liquid inlet 251, a liquid outlet 252, and a solid outlet 253. The liquid inlet 251 of the crystallization separation system 250 is connected to an extraction tail solution outlet 220 of the evaporator 240. Another part 1" of the raw brine to be treated and/or the part of the adsorption tail solution of the ion exchange adsorption unit 100 are evaporated and concentrated in the evaporator 240 to form extraction tail solution; the crystallization separation system 250 is configured to perform crystallization and separation on the extraction tail solution to obtain a lithium-containing concentrate and a crystalline salt mixture. The liquid outlet 252 is connected to the feed pretreatment unit 400. The lithium-containing concentrate flows out from the liquid outlet 252 and enters the feed pretreatment unit 400. The solid outlet 253 is connected to a solid inlet 350 of the recovery unit 300. The crystalline salt mixture discharged from the solid outlet 253 enters the recovery unit 300 through the solid inlet 350. The recovery unit 300 performs rinsing and recovery treatment on the crystalline salt mixture.

According to some embodiments of the present disclosure, referring to FIG. 2 to FIG. 5, the recovery unit 300 is connected to the feed pretreatment unit 400, a lithium-rich solution outlet 310 of the recovery unit is connected to the feed pretreatment unit 400, and the liquid outlet 252 is connected to the feed pretreatment unit 400. The recovery unit is configured to treat the crystalline salt mixture to obtain a lithium-rich solution. The lithium-rich solution enters the feed pretreatment unit for further treatment, and the lithium-containing concentrate flows out from the liquid outlet and enters the feed pretreatment unit for further treatment. Therefore, the raw brine treatment system can further treat the lithium-rich solution and the lithium-containing concentrate, thereby further improving the recovery rate of lithium in the raw brine.

According to some embodiments of the present disclosure, referring to FIG. 2, the lithium-rich solution outlet 310 and the liquid outlet 252 of the recovery unit may be respectively connected to different feed ports of the feed pretreatment unit 400, and the lithium-rich solution and the lithium-containing concentrate enter the feed pretreatment unit respectively through the different feed ports. According to some other embodiments of the present disclosure, referring to FIG. 3 to FIG. 5, the lithium-rich solution of the recovery unit 300 and the lithium-containing concentrate of the desorption water extraction unit 200 may merge and then enter the feed pretreatment unit 400.

According to some embodiments of the present disclosure, referring to FIG. 4 and FIG. 5, the feed pretreatment unit 400 may include a feed tank 420 and a filter 430 which are sequentially connected. The filter 430 is connected to the ion exchange adsorption unit 100 and the desorption water extraction unit 200. To be specific, after being treated by the feed tank 420 and the filter 430 in sequence, the raw brine 1 is divided into two parts, which respectively enter the ion exchange adsorption unit 100 and the desorption water extraction unit 200.

According to some embodiments of the present disclosure, referring to FIG. 4 and FIG. 5, the feed tank 420 is equipped with a stirrer 421. Therefore, the raw brine can be stirred in the feed tank to make the raw brine more uniform, thereby facilitating subsequent treatment and reducing the load of the filter.

According to an embodiment of the present disclosure, the filter 430 may be a cartridge filter, a bag filter, a filter screen, or other filtering components as long as the material can be well filtered.

According to an embodiment of the present disclosure, referring to FIG. 4 and FIG. 5, a second diverter valve 3 is arranged between the feed pretreatment unit 400 and the ion exchange adsorption unit 100 and the desorption water extraction unit 200, so as to adjust a split ratio of materials entering the ion exchange adsorption unit 100 and the desorption water extraction unit 200 by using the second diverter valve 3.

According to some embodiments of the present disclosure, referring to FIG. 4 and FIG. 5, the desorption water extraction unit 200 may further include a preheater 230 and a reverse osmosis assembly 260. The preheater 230 is connected to the evaporator 240 and the reverse osmosis assembly 260, and the reverse osmosis assembly 260 is connected to the desorption process 112. The desorption water extraction unit 200 may preheat the material entering the preheater 230, to realize the preheating of the material to be fed to the evaporator, thereby saving energy investment of the preheating heat source; and may also cool high-temperature condensed water to a temperature suitable for the reverse osmosis assembly. The evaporator 240 is an important component for extracting desorption water. The high-temperature condensed water generated in the evaporator 240 enters the preheater 230 and may be used for preheating the material. After entering the preheater 230 and preheating the material, the high-temperature condensed water is cooled down to form low-temperature condensed water. The low-temperature condensed water flows out of the preheater 230 and enters the reverse osmosis assembly 260 for multiple times of reverse osmosis to form desorption water, which enters the desorption process 112. The material in the preheater 230 is preheated and then enters the evaporator 240 for evaporation and concentration, and then enters the crystallization separation system 250 for crystallization and separation to obtain a crystalline salt mixture and a lithium-containing concentrate. Afterward, the crystalline salt mixture is discharged from the solid outlet 253 and enters the recovery unit 300 through the solid inlet 350 for rinsing and recovery treatment. The lithium-containing concentrate flows out from the liquid outlet 252 and enters the feed pretreatment unit 400. The lithium-containing concentrate may be used as a raw material and treated again by the raw brine treatment system, thereby improving the overall utilization rate of the raw brine and the recovery rate of lithium.

According to some embodiments of the present disclosure, the preheater 230 may be a shell-and-tube heat exchanger, a tubular heat exchanger, or a plate heat exchanger. The heat exchanges of the above types can all preheat the material and make full use of the high-temperature condensed water in the evaporator for preheating.

According to some embodiments of the present disclosure, the evaporator 240 may be a mechanical vapor recompression (MVR) assembly or a multiple effect distillator. In this way, the evaporator may better evaporate and concentrate the material, and achieve better solid-liquid separation, to obtain more high-temperature condensed water that can be used for preheating and obtain a crystalline salt mixture with lower moisture content.

According to some embodiments of the present disclosure, a residual heat exchanger may be arranged inside the evaporator 240. In this way, the evaporator may fully realize recovery of residual heat and cascade utilization of energy through the residual heat exchanger to reduce the use of external heat sources. An example where the evaporator is a mechanical vapor recompression (MVR) assembly is described. In a start-up stage of the evaporator, the evaporator needs to be started by using an external vapor heat source. As the start-up stage proceeds, the vapor consumption decreases continuously. After the evaporator runs normally, the vapor consumption stably remains at a lowest level or the external vapor heat source may be cut off.

According to some embodiments of the present disclosure, the crystallization separation system 250 may include a thickener, a centrifuge, and a discharge pump. The thickener, the centrifuge, and the discharge pump are connected in sequence. In this way, sufficient solid-liquid separation can be achieved by centrifugal separation to obtain a crystalline salt mixture with low moisture content.

According to some embodiments of the present disclosure, the reverse osmosis assembly 260 may be a three-stage reverse osmosis assembly, a four-stage reverse osmosis assembly, or a five-stage reverse osmosis assembly. In this way, the reverse osmosis assembly 260 may perform multiple times of reverse osmosis on the low-temperature condensed water to obtain more desorption water that meets usage requirements.

According to some embodiments of the present disclosure, the reverse osmosis assembly 260 may be a low-pressure reverse osmosis membrane, so as to reduce the energy consumption required for operation of the reverse osmosis assembly.

According to some embodiments of the present disclosure, a switch is arranged between the ion exchange adsorption unit 100 and the recovery unit 300. According to some specific embodiments of the present disclosure, a switch may be separately arranged between the ion exchange adsorption unit and the recovery unit to facilitate controlling on/off of a flow path between the ion exchange adsorption unit and the recovery unit. According to some other specific embodiments of the present disclosure, a port of the first diverter valve 2 connected to the recovery unit 300 may be used as a switch to control on/off of the flow path.

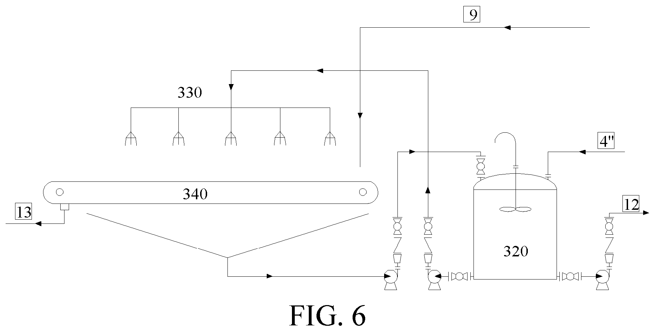

According to some other embodiments of the present disclosure, referring to FIG. 6, the recovery unit 300 may include a rinsing liquid tank 320, a spraying assembly 330, and a conveying assembly 340. The rinsing liquid tank 320 is connected to the ion exchange adsorption unit (not shown in FIG. 6). The conveying assembly 340 is connected to the desorption water extraction unit (not shown in FIG. 6). The spraying assembly 330 and the conveying assembly 340 are respectively connected to the rinsing liquid tank 320. The crystalline salt mixture can be fully rinsed by the recovery unit to obtain a lithium-rich solution, which is fed to the feed pretreatment unit for use as a raw material. Moreover, the recovery unit can continuously treat the crystalline salt mixture without interruption. In addition, the conveying assembly can be a conveyor belt, and the spraying assembly may rinse a large amount of crystalline salt mixture on the conveyor belt, achieving higher rinsing and recovery efficiency.

According to another aspect of the present disclosure, the present disclosure provides a method of raw brine treatment using the raw brine treatment system as described above. According to embodiments of the present disclosure, the method of raw brine treatment using the raw brine treatment system as described above includes the following steps.

S100: A part of raw brine to be treated is made enter the adsorption column of the ion exchange adsorption unit, and enter the desorption process for desorption after being subjected to the adsorption treatment in the adsorption process of the adsorption column, where in the desorption process, desorption treatment is performed on a lithium salt in the adsorption column, and a qualified solution is obtained after the desorption treatment.

According to an embodiment of the present disclosure, referring to FIG. 1 to FIG. 5, a part 1' of the raw brine to be treated enters the adsorption column 110 of the ion exchange adsorption unit 100, and enters the desorption process 112 for desorption treatment after being subjected to the adsorption treatment in the adsorption process 111 of the adsorption column 110, a qualified solution 11 is obtained after the desorption treatment, and the qualified solution 11 may enter subsequent devices for lithium extraction from salt lakes for subsequent treatment.

S200: A part of an adsorption tail solution formed after the raw brine is subjected to the adsorption treatment in the adsorption process is made enter the desorption water extraction unit, and/or another part of the raw brine to be treated is made enter the desorption water extraction unit, the adsorption tail solution and/or the raw brine are treated by the desorption water extraction unit to obtain desorption water and a crystalline salt mixture, and the desorption water is made enter the desorption process.

According to an embodiment of the present disclosure, referring to FIG. 1 to FIG. 5, adsorption tail solution 4 is formed after the raw brine is subjected to the adsorption treatment in the adsorption process 111, a part 4' of the adsorption tail solution enters the desorption water extraction unit 200, another part 1" of the raw brine to be treated also enters the desorption water extraction unit, the adsorption tail solution and the raw brine are treated by the desorption water extraction unit 200 to obtain desorption water 6 and a crystalline salt mixture 9, and the desorption water 6 enters the desorption process 112 for desorption treatment on a lithium salt in the adsorption column.

According to some embodiments of the present disclosure, the raw brine to be treated 1 first enters the feed pretreatment unit 400 for stirring and filtering, and then enters the ion exchange adsorption unit 100 and the desorption water extraction unit 200. In this way, the treatment effect of the raw brine can be improved, and the treatment efficiency of the raw brine by the ion exchange adsorption unit and the desorption water extraction unit can be improved.

According to some specific embodiments of the present disclosure, referring to FIG. 5, the part of the adsorption tail solution formed after the raw brine is subjected to the adsorption treatment in the adsorption process 111 and another part of the raw brine to be treated are preheated by the preheater 230 of the desorption water extraction unit 200, and then enter the evaporator 240 for evaporation and concentration to generate high-temperature condensed water 5 and extraction tail solution 8. The high-temperature condensed water 5 enters the preheater 230 for heat release to generate low-temperature condensed water 5'. The low-temperature condensed water 5' enters the reverse osmosis assembly 260. The low-temperature condensed water 5' is desalted in the reverse osmosis assembly 260 to form the desorption water 6 and waste liquid 7. The desorption water 6 enters the desorption process 112 for desorption treatment on the lithium salt in the adsorption column. The waste liquid 7 is discharged. The extraction tail solution 8 enters the crystallization separation system 250 for crystallization and separation treatment to form a lithium-containing concentrate 10 and the crystalline salt mixture 9. The lithium-containing concentrate 10 enters the feed pretreatment unit 400, and the crystalline salt mixture 9 enters the recovery unit 300 for rinsing and recovery treatment. By the rinsing and recovery treatment, the unseparated lithium-rich solution in the crystalline salt mixture 9 can be fully recovered.

According to some embodiments of the present disclosure, a split ratio of the material entering the ion exchange adsorption unit 100 to the material entering the desorption water extraction unit 200 is 1:1.2 to 1:0.9, for example, may be 1:1.2, 1:1.1, 1:1.0, 1:0.9, etc., and may be controlled by adjusting the second diverter valve 3. More specifically, the split ratio may be determined according to factors such as the specific composition of the raw brine, the evaporation capacity of the evaporator, and the diversion of the first diverter valve 2. Therefore, setting of the split ratio above can make the ion exchange adsorption unit and the desorption water extraction unit better matched, thereby improving the treatment effect of the system on the raw brine.

According to an embodiment of the present disclosure, the preheater 230 has a cold-side inlet, a cold-side outlet, a hot-side inlet, and a hot-side outlet. The cold-side inlet is a feed port for the raw brine to enter the preheater, the cold-side outlet is a discharge port for the material in the preheater to enter the evaporator, the hot-side inlet is a feed port for the high-temperature condensed water to enter the preheater, and the hot-side outlet is a discharge port for the low-temperature condensed water to flow out of the preheater.

According to some embodiments of the present disclosure, the temperature of the cold-side inlet of the preheater 230 may be 15°C to 27°C, for example, may be 15°C, 18°C, 20°C, 23°C, 25°C, 27°C, etc. depending on the temperature of the raw brine.

According to some embodiments of the present disclosure, the temperature of the cold-side outlet of the preheater 230 may be 95°C to 105°C, for example, may be 95°C, 98°C, 100°C, 103°C, 105°C, etc. depending on the temperature and flow rate of the high-temperature condensed water 5, and may be calculated by thermal balance.

According to some embodiments of the present disclosure, the temperature of the high-temperature condensed water 5 at the hot-side inlet of the preheater 230 may be 100°C to 110°C, for example, may be 100°C, 102°C, 105°C, 107°C, 110°C, etc. depending on operating parameters of the evaporator. In other words, the high-temperature condensed water may have a suitable temperature or temperature range by adjusting and setting the operating parameters of the evaporator.

According to some embodiments of the present disclosure, the temperature of the hot-side outlet of the preheater 230 may be 25°C to 30°C, for example, may be 25°C, 27°C, 28°C, 30°C, etc.

By setting the temperature of the cold-side inlet, the temperature of the cold-side outlet, the high-temperature condensed water at the hot-side inlet and the temperature of the hot-side outlet of the preheater to be in appropriate temperature ranges, heat energy can be made full use of and damage to the diaphragm in the reverse osmosis assembly can be avoided, thus allowing the reverse osmosis assembly to have a longer service life.

According to some embodiments of the present disclosure, an evaporation capacity per ton of feed in the evaporator 240 is 400 kg to 600 kg of distilled water, and a conductivity of the distilled water is 50 µs/cm to 100 µs/cm, for example, may be 50 µs/cm, 60 µs/cm, 70 µs/cm, 80 µs/cm, 90 µs/cm, 100 µs/cm, etc. In this way, the evaporator can generate a sufficient amount of distilled water for preheating treatment of the preheater, thereby reducing the use of external vapor heat sources. Distilled water has a low conductivity and contains a small quantity of conductive ions, and therefore is more conducive to the subsequent obtaining of desorption water through reverse osmosis treatment.

According to some embodiments of the present disclosure, a conductivity of the low-temperature condensed water 5' is 50 µs/cm to 100 µs/cm, for example, may be 50 µs/cm, 60 µs/cm, 70 µs/cm, 80 µs/cm, 90 µs/cm, 100 µs/cm, etc.

According to some embodiments of the present disclosure, a conductivity of the waste liquid 7 may be 500 µs/cm to 2000 µs/cm, for example, may be 500 µs/cm, 800 µs/cm, 1000 µs/cm, 1200 µs/cm, 1500 µs/cm, 2000 µs/cm, etc. After the reverse osmosis treatment of the low-temperature condensed water by the reverse osmosis assembly, the waste liquid and the desorption water that can be used for desorption of the lithium salt in the adsorption column are well separated.

According to embodiments of the present disclosure, the recovery rate of the low-temperature condensed water 5' may be 90% to 95%, for example, may be 90%, 91%, 92%, 93%, 94%, 95%, etc. To be specific, the weight of the desorption water 6 obtained after the reverse osmosis treatment by the reverse osmosis assembly 260 is 90% to 95% of the weight of the low-temperature condensed water 5' entering the reverse osmosis assembly 260. In this way, a high recovery rate is achieved, and a large amount of desorption water can be generated for desorption treatment in the desorption process.

According to an embodiment of the present disclosure, a moisture content of the crystalline salt mixture 9 may be 5% to 12%, for example, may be 5%, 7%, 9%, 10%, 12%, etc. After treatment by the crystallization separation system, the moisture content of the crystalline salt mixture can be reduced, to facilitate the subsequent rinsing and recovery treatment.

According to an embodiment of the present disclosure, a conductivity of the desorption water is below 50 µs/cm, i.e., the conductivity of the desorption water is less than 50 µs/cm. For example, the conductivity of the desorption water may be 45 µs/cm, 40 µs/cm, 35 µs/cm, 30 µs/cm, 25 µs/cm, 20 µs/cm, 10 µs/cm, etc. The desorption water contains a small quantity of conductive ions and can be used for desorption treatment of the lithium salt in the adsorption column, providing a good desorption effect.

S300: Another part of the adsorption tail solution formed after the raw brine is subjected to the adsorption treatment in the adsorption process is made enter the recovery unit, the crystalline salt mixture is made enter the recovery unit, and the crystalline salt mixture is rinsed and recovered by using the adsorption tail solution in the recovery unit.

According to an embodiment of the present disclosure, another part 4' of the adsorption tail solution formed after the raw brine is subjected to the adsorption treatment in the adsorption process 111 enters the recovery unit 300, the crystalline salt mixture 9 separated by the desorption water extraction unit enters the recovery unit 300, and the crystalline salt mixture 9 is rinsed and recovered by using the adsorption tail solution in the recovery unit 300.

According to an embodiment of the present disclosure, referring to FIG. 5, the crystalline salt mixture 9 enters the recovery unit 300 for rinsing and recovery to form a lithium-rich solution 12 and a waste crystalline salt mixture 13. The lithium-rich solution 12 enters the feed pretreatment unit 400 and the waste crystalline salt mixture 13 is discharged to the outside. It should be noted that the lithium-rich solution 12 and the lithium-containing concentrate 10 may respectively enter the feed pretreatment unit 400 through different pipelines, or the lithium-rich solution 12 and the lithium-containing concentrate 10 may merge and then enter the feed pretreatment unit through the same pipeline. It should also be noted that, the lithium-rich solution 12 and the lithium-containing concentrate 10 may enter the feed tank 420 and the filter 430 of the feed pretreatment unit 400 in sequence, and the raw brine 1, the lithium-rich solution 12, and the lithium-containing concentrate 10 enter the feed tank, and can be discharged after stirring treatment to ensure a uniform composition and temperature. Moreover, the lithium-rich solution and the lithium-containing concentrate may contain a small amount of crystalline salt particles, and stirring treatment can fully dissolve the crystalline salt particles to reduce the load of the filter.

According to some embodiments of the present disclosure, the raw brine to be treated 1 and/or the lithium-containing concentrate 10 and/or the lithium-rich solution 12 are fed into the feed tank 420 and stirred for 15 minutes to 30 minutes, for example, are stirred for 15 minutes, 18 minutes, 20 minutes, 23 minutes, 25 minutes, 27 minutes, 30 minutes, etc. In this way, a uniform composition and temperature can be obtained after stirring, and the crystalline salt particles that may be contained can be fully dissolved, thereby reducing the load on the filter.

According to some embodiments of the present disclosure, when the crystalline salt mixture is rinsed and recovered, the switch between the ion exchange adsorption unit 100 and the recovery unit 300 may be switched off by intermittent operation to cut off a flow path between the ion exchange adsorption unit 100 and the recovery unit 300. Specifically, a flow path of the first diverter valve 2 to the recovery unit may be cut off. According to some embodiments of the present disclosure, the recovery unit 300 is equipped with a centrifuge configured for centrifugal separation of the mixture of the crystalline salt mixture and the adsorption tail solution. The adsorption tail solution may be circulated 3 to 8 times in the recovery unit to fully enrich and absorb the lithium-containing concentrate remaining in the crystalline salt mixture. According to some embodiments of the present disclosure, the total time for rinsing and recovering the crystalline salt mixture is 20 minutes to 60 minutes. For example, the adsorption tail solution may be circulated in the recovery unit for 20 minutes, 30 minutes, 50 minutes, 60 minutes, etc. In this way, it is ensured that the lithium-containing concentrate remaining in the crystalline salt mixture can be more fully enriched and absorbed, thereby further improving the utilization rate of raw materials and the recovery rate of lithium.

According to some other embodiments of the present disclosure, the crystalline salt mixture may also be rinsed and recovered by a continuous treatment method using the recovery unit in FIG. 6. When the recovery unit shown in FIG. 6 is used to perform rinsing and recovery treatment on the crystalline salt mixture, another part 4" of the adsorption tail solution enters the rinsing liquid tank 320, and then enters the spraying assembly 330. The crystalline salt mixture 9 falls onto the conveying assembly 340. The crystalline salt mixture 9 is rinsed and recovered by the spraying assembly 330. The adsorption tail solution in the rinsing liquid tank 320 may also repeatedly rinse the crystalline salt mixture 9 until the lithium content in the adsorption tail solution reaches a certain level. The obtained lithium-rich solution 12 first returns to the rinsing liquid tank 320, and then enters the feed tank 420 of the feed pretreatment unit 400 as a raw material. The waste crystalline salt mixture 13 is discharged from the system to the outside.

According to some embodiments of the present disclosure, when the recovery unit 300 needs the adsorption tail solution, the split ratio of the adsorption tail solution entering the desorption water extraction unit 200 to the adsorption tail solution entering the recovery unit 300 is 10:1 to 25:1, for example, may be 10:1, 13:1, 15:1, 18:1, 20:1, 22:1, 25:1, etc., and may be specifically controlled by the first diverter valve 2. In this way, the adsorption tail solution can be more fully utilized to extract desorption water and rinse the crystalline salt mixture, thereby further reducing the use of external vapor heat sources and further improving the efficiency of rinsing the crystalline salt mixture.

According to still another aspect of the present disclosure, the present disclosure provides a lithium compound, where a method for preparing the lithium compound includes a step of preparing a qualified solution, and the qualified solution is extracted using the raw brine treatment system or obtained by the raw brine treatment method. In the desorption process, desorption treatment is performed on a lithium salt in the adsorption column, and a qualified solution is obtained after the desorption treatment. The qualified solution may enter subsequent devices for lithium extraction from salt lakes for subsequent treatment to obtain the lithium compound.

To sum up, using the raw brine treatment system provided by the present disclosure for raw brine treatment has the following advantages: (1) The recycling of adsorption tail solution can be realized. The liquid to be discharged by the entire system includes only the waste liquid generated by the reverse osmosis assembly, and the amount of liquid discharged is only 1% to 5% of the amount of adsorption tail solution discharged in conventional processes, i.e., the amount of liquid discharged can be reduced by 95% to 99%. The present disclosure breaks through constraints on the discharge of adsorption tail solution, and can solve the problem of difficulty in discharging and treating the adsorption tail solution. (2) With the use of the evaporator to evaporate and concentrate the mixture of the raw brine and the adsorption tail solution, a sufficient amount of desorption water can be directly obtained from the mixture of the raw brine and the adsorption tail solution, thereby the supply of desorption water is ensured and the problem of difficulty in obtaining desorption water in salt lake lithium extraction plants and processes is solved. (3) Compared with conventional methods of using the raw brine, by the recycling of the adsorption tail solution in the present disclosure, the lithium recovery rate of the raw brine can be increased by 2% to 5% without affecting the adsorption efficiency of the ion exchange adsorption unit.

In the description of the specification, the description with reference to the terms "an embodiment", "another embodiment", "still another embodiment", "some embodiments", "some other embodiments", "some specific examples", and so on means that specific features, structures, materials or characteristics described in connection with the embodiment are embraced in at least one embodiment of the present disclosure. In the specification, the illustrative expression of the above terms is not necessarily referring to the same embodiment or example. Moreover, the described specific features, structures, materials or characteristics may be combined in any suitable manners in one or more embodiments. In addition, where there are no contradictions, the various embodiments or examples described in this specification and features of various embodiments or examples can be combined by those skilled in the art. In addition, it should be noted that in the specification, the terms "first" and "second" are used herein for purposes of description, and are not intended to indicate or imply relative importance or implicitly point out the number of the indicated technical feature.

Although the embodiments of the present disclosure have been illustrated and described above, it is to be understood that the above embodiments are exemplary and not to be construed as limiting the present disclosure, and that changes, modifications, substitutions and alterations can be made by those skilled in the art without departing from the scope of the present disclosure.

## Claims

1. A raw brine treatment system, comprising:
an ion exchange adsorption unit (100), wherein the ion exchange adsorption unit (100) comprises one or more adsorption columns (110) filled with an adsorbent, a part of raw brine to be treated is subjected to adsorption treatment in an adsorption process (112) of the adsorption column (110) and then subjected to desorption treatment with desorption water in a desorption process (112) of the adsorption column (110);
a desorption water extraction unit (200), wherein another part of the raw brine to be treated and/or a part of an adsorption tail solution of the ion exchange adsorption unit (100) enters the desorption water extraction unit (200), the desorption water extraction unit (200) being configured to extract the desorption water from the raw brine and/or the adsorption tail solution that enters the desorption water extraction unit (200), the desorption water extraction unit (200) being connected to the ion exchange adsorption unit (100), so as to make the extracted desorption water enter the desorption process (112) for desorption treatment on a lithium salt in the adsorption column (110); and
a recovery unit (300), wherein the recovery unit (300) is connected to the ion exchange adsorption unit (100) and the desorption water extraction unit (200).

2. The raw brine treatment system according to claim 1, wherein the desorption water extraction unit (200) is connected to the ion exchange adsorption unit (100), so as to make a part of the adsorption tail solution of the ion exchange adsorption unit (100) enter the desorption water extraction unit (200).

3. The raw brine treatment system according to claim 1 or 2, further comprising: a feed pretreatment unit (400), wherein the feed pretreatment unit (400) is connected to the ion exchange adsorption unit (100) and the desorption water extraction unit (200), and a discharge port (410) of the feed pretreatment unit (400) is respectively connected to a feed port (130) of the ion exchange adsorption unit (100) and a feed port (210) of the desorption water extraction unit (200).

4. The raw brine treatment system according to claim 3, wherein the desorption water extraction unit (200) comprises an evaporator (240) and a crystallization separation system (250); the crystallization separation system (250) comprises a liquid inlet (251), a liquid outlet (252), and a solid outlet (253);
another part of the raw brine to be treated and/or the part of the adsorption tail solution of the ion exchange adsorption unit (100) are evaporated and concentrated in the evaporator (240) to form extraction tail solution; an extraction tail solution outlet (220) of the evaporator (240) is connected to the liquid inlet (251) of the crystallization separation system (250); the crystallization separation system (250) is configured to perform crystallization and separation on the extraction tail solution to obtain a lithium-containing concentrate and a crystalline salt mixture;
the liquid outlet (252) is connected to the feed pretreatment unit (400); the lithium-containing concentrate flows out of the liquid outlet (252) and enters the feed pretreatment unit (400);
the solid outlet (253) is connected to a solid inlet (350) of the recovery unit (300); and the crystalline salt mixture discharged from the solid outlet (253) enters the recovery unit (300) through the solid inlet (350).

5. The raw brine treatment system according to claim 4, wherein the recovery unit (300) is configured to treat the crystalline salt mixture to obtain a lithium-rich solution, and a lithium-rich solution outlet of the recovery unit (300) is connected to the feed pretreatment unit (400).

6. The raw brine treatment system according to claim 5, wherein the lithium-rich solution and the lithium-containing concentrate merge and then enter the feed pretreatment unit (400).

7. The raw brine treatment system according to any one of claims 3 to 6, wherein the feed pretreatment unit (400) comprises a feed tank (420) and a filter (430) connected in sequence, and the filter (430) is connected to the ion exchange adsorption unit (100) and the desorption water extraction unit (200).

8. The raw brine treatment system according to claim 7, wherein the feed tank (420) is equipped with a stirrer (421).

9. The raw brine treatment system according to any one of claims 4 to 6, wherein the desorption water extraction unit (200) further comprises a preheater (230) and a reverse osmosis assembly (260), the preheater (230) is connected to the evaporator (240) and the reverse osmosis assembly (260), and the reverse osmosis assembly (260) is connected to the desorption process (112).

10. The raw brine treatment system according to claim 9, wherein at least one of the following conditions is satisfied:
the preheater (230) is a shell-and-tube heat exchanger, a tubular heat exchanger, or a plate heat exchanger;
the evaporator (240) is a mechanical vapor recompression assembly or a multiple effect distillator;
a residual heat exchanger is arranged inside the evaporator (240);
the crystallization separation system (250) comprises a thickener, a centrifuge, and a discharge pump; and
the reverse osmosis assembly (260) is a three-stage reverse osmosis assembly, a four-stage reverse osmosis assembly, or a five-stage reverse osmosis assembly.

11. The raw brine treatment system according to any one of claims 1 to 10, wherein a switch is arranged between the ion exchange adsorption unit (100) and the recovery unit (300).

12. The raw brine treatment system according to any one of claims 1 to 11, wherein the recovery unit (300) comprises a rinsing liquid tank (320), a spraying assembly (330), and a conveying assembly (340), the rinsing liquid tank (320) is connected to the ion exchange adsorption unit (100), the conveying assembly (340) is connected to the desorption water extraction unit (200), and the spraying assembly (330) and the conveying assembly (340) are respectively connected to the rinsing liquid tank (320).

13. A method of raw brine treatment using the raw brine treatment system according to any one of claims 1 to 12, comprising:
making a part of raw brine to be treated enter the adsorption column (110) of the ion exchange adsorption unit (100), and enter the desorption process (112) after being subjected to the adsorption treatment in the adsorption process (112) of the adsorption column (110), wherein in the desorption process (112), desorption treatment is performed on a lithium salt in the adsorption column (110), and a qualified solution is obtained after the desorption treatment;
making a part of adsorption tail solution formed after the raw brine is subjected to the adsorption treatment in the adsorption process (112) enter the desorption water extraction unit (200), and making another part of the raw brine to be treated enter the desorption water extraction unit (200), wherein the part of adsorption tail solution and another part of the raw brine to be treated are treated by the desorption water extraction unit (200) to obtain desorption water and a crystalline salt mixture, and the desorption water is made enter the desorption process (112); and
making another part of the adsorption tail solution formed after the raw brine is subjected to the adsorption treatment in the adsorption process (112) enter the recovery unit (300), and making the crystalline salt mixture enter the recovery unit (300), wherein the crystalline salt mixture is rinsed and recovered by using the adsorption tail solution in the recovery unit (300).

14. The method according to claim 13, wherein the raw brine treatment system further comprises a feed pretreatment unit (400), the feed pretreatment unit (400) is connected to the ion exchange adsorption unit (100) and the desorption water extraction unit (200), a discharge port (410) of the feed pretreatment unit (400) is respectively connected to a feed port (130) of the ion exchange adsorption unit (100) and a feed port (210) of the desorption water extraction unit (200), and the raw brine to be treated enters the ion exchange adsorption unit (100) and the desorption water extraction unit (200) after being stirred and filtered by the feed pretreatment unit (400).

15. The method according to claim 14, wherein the desorption water extraction unit (200) comprises an evaporator (240), a crystallization separation system (250), a preheater (230), and a reverse osmosis assembly (260), the preheater (230) is connected to the evaporator (240) and the reverse osmosis assembly (260), the reverse osmosis assembly (260) is connected to the desorption process (112), the part of the adsorption tail solution formed after the raw brine is subjected to the adsorption treatment in the adsorption process (112) and another part of the raw brine to be treated are preheated by the preheater (230) of the desorption water extraction unit (200), and then enter the evaporator (240) for evaporation and concentration to generate high-temperature condensed water and extraction tail solution,
the high-temperature condensed water enters the preheater (230) for heat release to generate low-temperature condensed water, the low-temperature condensed water enters the reverse osmosis assembly (260), the low-temperature condensed water is desalted in the reverse osmosis assembly (260) to form the desorption water and waste liquid, the waste liquid is discharged,
the extraction tail solution enters the crystallization separation system (250) of the desorption water extraction unit (200), the crystallization separation system (250) performs crystallization and separation on the extraction tail solution to form a lithium-containing concentrate and a crystalline salt mixture, the lithium-containing concentrate enters the feed pretreatment unit (400), and the crystalline salt mixture enters the recovery unit (300) for rinsing and recovery to form a lithium-rich solution and a waste crystalline salt mixture, the lithium-rich solution enters the feed pretreatment unit (400), and the waste crystalline salt mixture is discharged.

16. The method according to claim 15, wherein at least one of the following conditions is satisfied:
a temperature of a cold-side inlet of the preheater (230) is 15°C to 27°C;
a temperature of a cold-side outlet of the preheater (230) is 95°C to 105°C;
a temperature of the high-temperature condensed water at a hot-side inlet of the preheater (230) is 100°C to 110°C;
a temperature of a hot-side outlet of the preheater (230) is 25°C to 30°C;
an evaporation capacity per ton of feed in the evaporator (240) is 400 kg to 600 kg of distilled water, and a conductivity of the distilled water is 50 µs/cm to 100 µs/cm;
a conductivity of the low-temperature condensed water is 50 µs/cm to 100 µs/cm;
a conductivity of the waste liquid is 500 µs/cm to 2000 µs/cm;
a recovery rate of the low-temperature condensed water is 90% to 95%;
a moisture content of the crystalline salt mixture is 5% to 12%; and
a conductivity of the desorption water is 50 µs/cm or less.

17. The method according to claim 15 or 16, wherein the feed pretreatment unit (400) comprises a feed tank (420), and the raw brine to be treated and/or the lithium-containing concentrate and/or the lithium-rich solution enters the feed tank (420) and is stirred for 15 minutes to 30 minutes.

18. The method according to claim 15, wherein a switch is arranged between the ion exchange adsorption unit (100) and the recovery unit (300), and when the crystalline salt mixture is rinsed and recovered, the switch between the ion exchange adsorption unit (100) and the recovery unit (300) is switched off to cut off a flow path between the ion exchange adsorption unit (100) and the recovery unit (300).

19. The method according to any one of claims 15 to 18, wherein at least one of the following conditions is satisfied:
a total time for rinsing and recovering the crystalline salt mixture is 20 minutes to 60 minutes;
when the recovery unit (300) needs the adsorption tail solution, a split ratio of the adsorption tail solution entering the desorption water extraction unit (200) to the adsorption tail solution entering the recovery unit (300) is 10:1 to 25:1; and
a split ratio of a feed entering the ion exchange adsorption unit (100) and a material entering the desorption water extraction unit (200) is 1:1.2 to 1:0.9.

20. A lithium compound, wherein a method for preparing the lithium compound comprises a step of preparing a qualified solution, and the qualified solution is extracted using the raw brine treatment system according to any one of claims 1 to 12 or obtained by the raw brine treatment method according to any one of claims 13 to 19.
